# EUROPEAN PATENT SPECIFICATION

(11) **EP 1 055 498 B1**
(45) Date of publication and mention of the grant of the patent: **12.01.2005**
(21) Application number: 00111177.2
(22) Date of filing: 24.05.2000
(51) Int. Cl.: B28D 1/08

(54) **Wire sawing machine having a portal structure for the cutting of material in block form**
Drahtsäge mit Portalrahmen zum Schneiden von blockförmigen Materialien
Scie à fil à structure en portique pour la découpe de matériaux sous forme de bloc

(30) Priority: 25.05.1999 IT TO990441; 25.05.1999 IT TO990442; 25.05.1999 IT TO990443
(43) Date of publication of application: 29.11.2000
(73) Proprietor: CO.FI.PLAST. S.r.l., 10010 Lessolo (Torino) (IT)
(72) Inventor: Brocco, Emilio, 10010 Lessolo (Torino) (IT)
(74) Representative: Apra', Mario

(56) References cited:
- FR-A- 550 084

## Description

The present invention relates to a wire sawing machine having a portal structure for the cutting of material in block form, for example blocks of stone, metal and the like (see for example FR-A-550 084).

Wire sawing machines of the specified type are known. They generally comprise a portal structure having two uprights and a top cross-piece. In relation to this portal structure, a wire-type cutting tool, known as the "cutting wire" (i.e. a cable-like member made from steel or the like) in the form of a closed ring, is caused to circulate over a plurality of pulleys (one of which is driven) supported by the portal and is caused to move in a plane (hereinafter called for the sake of brevity the "cutting plane") substantially parallel to the vertical median plane dividing both the uprights and the cross-piece of the said portal (hereinafter referred to for brevity as the "median plane").

A block of material to be cut is arranged within the opening of the portal, for example on a convenient support means, in order to be cut crosswise in the cutting plane. The closed-ring cutting wire performs the cutting of the block in the cutting plane with its lower strand (the strand remote from the cross-piece of the portal), which is passed between at least two pulleys which are each supported to slide along a respective upright. To this end, the cutting wire is caused to perform a working travel between a raised position, in which its lower strand is not in contact with the block to be cut, and a lower position, in which the said strand has performed a cut passing transversely through the block within the cutting plane. After the cut has been made, the cutting wire performs a reverse travel until reaching its raised position of rest.

Such known wire sawing machines are widely used.

However, in such known wire sawing machines, the driving members and/or the tensioning members of the cutting wire are disposed substantially outside the overall profile of the portal structure, viewed frontally or dorsally. This fact gives rise to structural instabilities of the machine and significant vibrations during cutting, which also result in poor cutting quality and a high level of wear on parts of the machine, together with a significant bulk of the said machine, which sometimes restricts its possible uses and increases its production cost.

Furthermore, in the known wire sawing machines of the specified type, the geometrical shape of the closed ring formed by the cutting wire cannot be changed (it being possible only to vary the tension of the wire forming it). This fact, therefore, makes it impossible to adapt the arrangement of the cutting wire in relation to the requirements of the cut to be performed and/or the material to be cut.

The known wire sawing machines of the type indicated are not suitable for performing trimming or squaring operations on blocks of material simply and quickly and in areas lacking in suitable equipment, for example in a stone quarry.

Furthermore, the known wire sawing machines are not self-propelling, which confines their use exclusively to suitably equipped facilities.

It is therefore an object of the present invention to provide a wire sawing machine having a portal structure for the cutting of material in block form, for example blocks of stone, metal and the like, which has high structural stability and little tendency to vibrate during cutting, in a manner such as to improve the cutting quality and reduce wear on the parts of the machine.

Another object of the invention is to provide a wire sawing machine as specified which is compact, although possessing a broad free space in the portal structure for arranging the blocks to be cut therein, and is therefore more flexible in use and of substantially produced cost.

A further object is that of providing a wire sawing machine as indicated in which the closed-ring cutting wire possesses shapes that can be varied in relation to the requirements of the cut to be made and the material to be cut.

Yet another object is that of providing a wire sawing machine as specified which is structurally simplified and functionally reliable and safe.

It is also an object of the invention to provide a wire sawing machine as specified above which makes it possible to undertake trimming and/or squaring operations on blocks of material, simply and quickly, even in areas lacking in suitable equipment, for example in a stone quarry.

Yet another object is to provide a wire sawing machine as stated which is self-propelling for use in areas lacking in suitable equipment, for example in a stone quarry.

With these objects in mind, the present invention provides a wire sawing machine having a portal structure for the cutting of material in block form according to claim 1.

Further advantageous features are apparent from the subclaims.

The abovementioned claims are fully incorporated here by way of reference.

The present invention will be better understood from the detailed description which follows with reference to the illustrative drawings attached, in which:
- Fig. 1 is a view in frontal elevation of a wire sawing machine having a portal structure for the cutting of material in block form, according to a first example of embodiment of the present invention;
- Figures 2, 3 and 4 are views on an enlarged scale and in section, respectively along the lines II-II, III-III and IV-IV in Fig. 1 (the section in Fig. 4 being partial);
- Fig. 5 shows in perspective the wire sawing machine according to the invention in a second example of embodiment, suitable for the trimming and/or squaring of blocks, particularly of stonelike material;
- Figures 6 and 7 are views, respectively, in frontal elevation and lateral elevation of the sawing machine shown in Fig. 5, with parts shown cut away;
- Fig. 8 is a sectional view along the line VIII-VIII in Fig. 7, with parts shown in section;
- Fig. 9 shows in perspective an alternative embodiment of the wire sawing machine according to Fig. 5;
- Figures 10 and 11 are views, respectively, in front elevation and in lateral elevation of the sawing machine shown in Fig. 9;
- Fig. 12 shows in perspective the wire sawing machine according to the invention in a third example of embodiment, suitable for trimming and/or squaring blocks, particularly of stonelike material;
- Figures 13 and 14 are views, respectively, in frontal elevation and in lateral elevation of the sawing machine shown in Fig. 12, with parts cut away;
- Fig. 15 is a view in section along the line XV-XV in Fig. 14, with parts cut away.

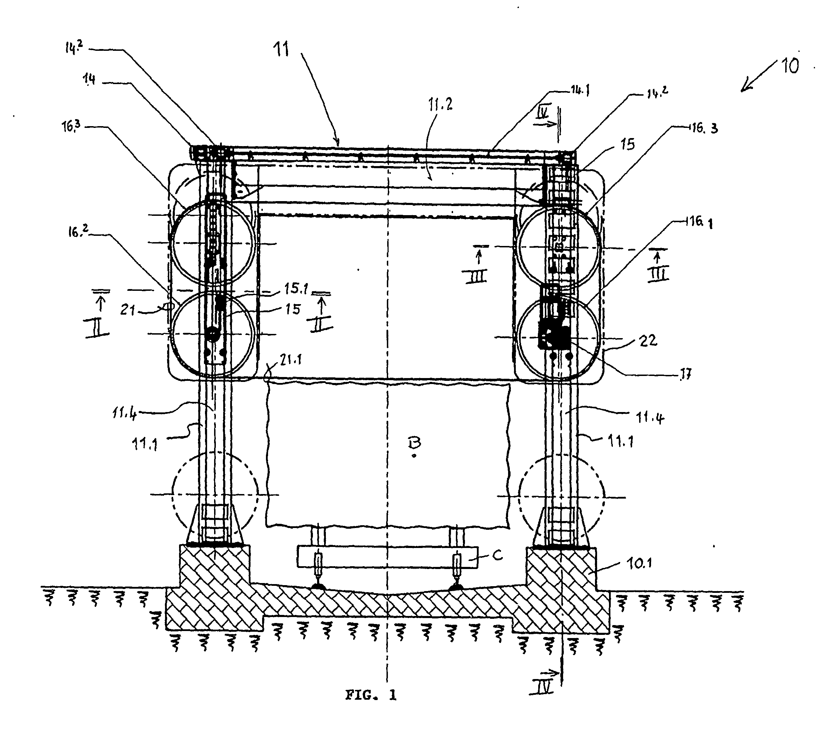

### First embodiment (Figures 1-4)

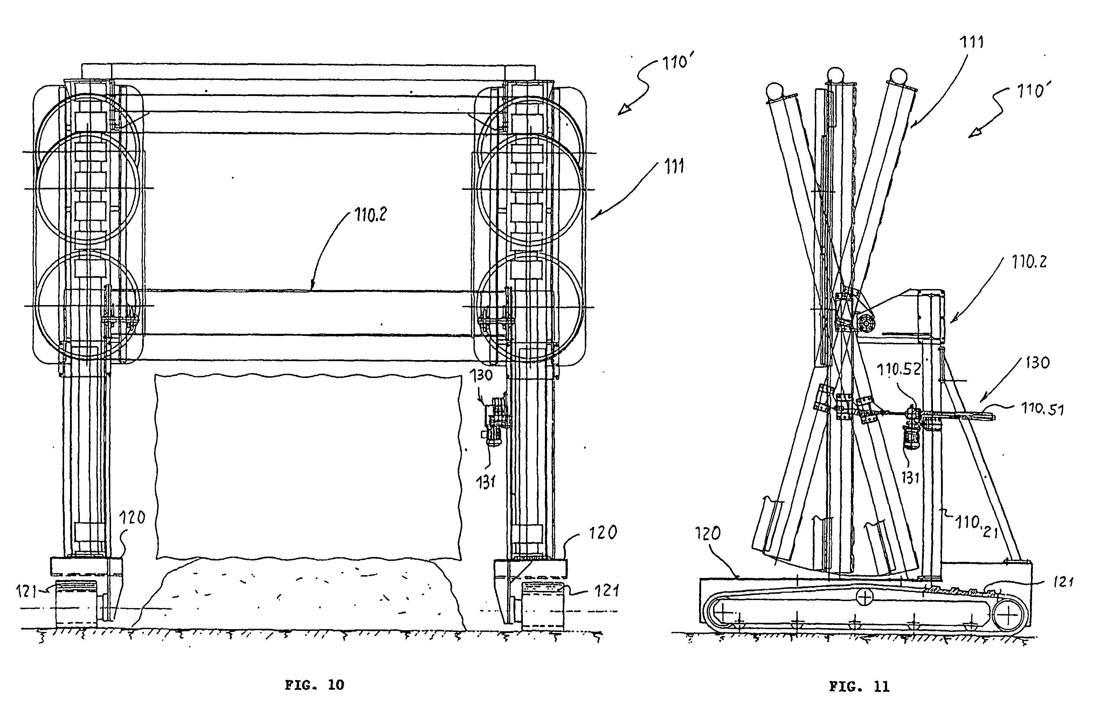

In Fig. 1, 10 designates as a whole the wire sawing machine having a portal structure for the cutting of material in block form, according to the present invention.

The said sawing machine 10 comprises a portal structure 11, stably fixed relative to a base 10.1, for example of concrete.

The said portal structure 11 includes a pair of vertical hollow-bodied uprights 11.1 connected at the top by means of a horizontal joining cross-piece 11.2.

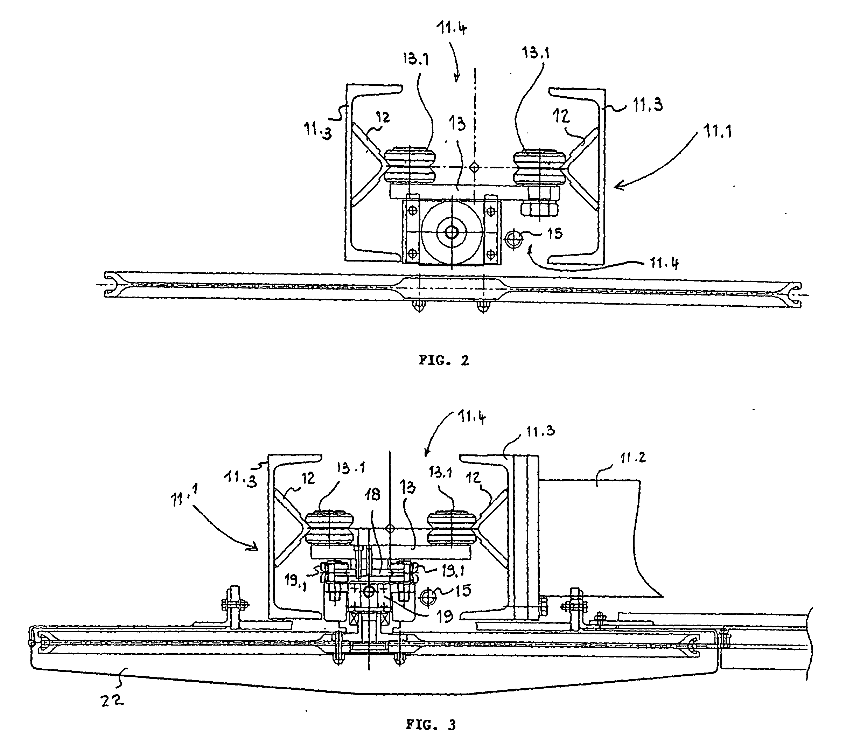

Each hollow-bodied upright 11.1 is formed by a pair of strong metal sections 11.3, substantially of "U" shape (Figs 2, 3), facing each other at a distance apart so as to form a box-type body having two continuous vertical rectilinear slits 11.4 between the respective opposing flanges. The said slits 11.4 are open, respectively, on the front and back surfaces of the said upright 11.1.

Fixed in each upright 11.1 are a pair of opposing vertical rectilinear guides 12 (Figs 2, 3), each arranged on an intermediate part of a respective section 11.3. Each guide 12 is formed by a metal section having substantially the shape of an equilateral "L", welded to the inner face of the said intermediate part of the section 11.3 along the outer edges of its flanges and having its intermediate outer angle located in the median vertical plane (hereinafter referred to for brevity as the "median plane") passing through both the uprights 11.1 and the cross-piece 11.2 of the portal structure 11.

In each upright 11.1, a respective plate-type slide 13 is mounted to slide vertically, by means of a plurality of pairs of twinned idle rollers 13.1, having axes orthogonal to the said median plane and engaged in order to roll along the rectilinear guides 12.

An electric geared motor (Fig. 1), which is reversible, is fixed relative to the cross-piece 11.2, substantially within the overall profile of the portal 11, viewed frontally or dorsally. It controls the rotation of a transmission shaft 14.1 supported transversely on the portal and along the cross-piece 11.2 by its axis which is substantially parallel to the said median plane.

A long adjustment screw 15 is supported to rotate in each upright 11, having its axis vertical and substantially orthogonal relative to the axis of the transmission shaft 14.1, and from which the latter derives its rotary motion by means of a respective bevel gear 14.2. The said adjustment screw 15 is engaged by threaded coupling into a corresponding nut 15.1 (Fig. 1) fixed on the slide 13 sliding in the said upright 11.1 along the said guides 12, in a manner such that the rotation of the geared motor 14 in one direction or the other determines the corresponding vertical movement of the said slide 13 towards or away from the cross-piece 11.2, as the case may be.

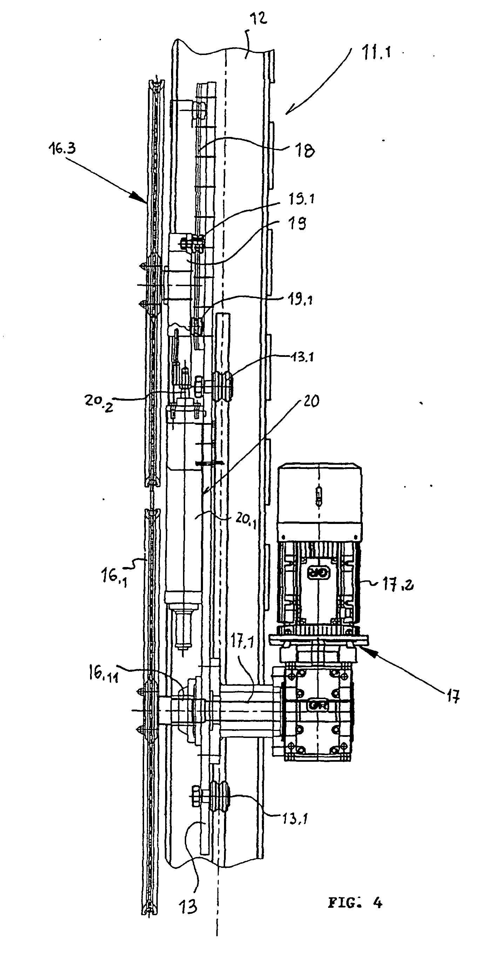

One of the two slides 13 bears on one of its faces (hereinafter referred to as the ^{"}front face") a driven pulley 16.1 (Figs 1, 4) arranged outside the respective upright 11.1 and having its shaft 16.11 with its axis substantially orthogonal relative to the said median plane and passing freely through one of the slits 11.4 (termed the front slit) of the respective upright 11.1.

The said slide 13 bearing the said driven pulley 16.1 also bears, on its opposite face, an electric geared motor unit 17, whose output shaft 17.1 is coaxial with and kinematically linked to the shaft 16.11 of the driven pulley 16.1 and passes through the other slit 11.4 of the said upright 11.1. A geared motor 17.2 is cantilever-supported on the said slide 13, outside the said upright 11.1 but substantially within the overall profile of the said upright, viewed frontally or dorsally.

The other slide 13 bears, on its front face, a stationary idle pulley 16.2 essentially coplanar with the said driven pulley 16.1 and arranged with its shaft having its axis substantially orthogonal relative to the said median plane and passing freely through the front slit 11.4 in the respective upright 11.1.

The said idle pulley 16.2 and the said driven pulley 16.1 are each disposed in an area of the respective slide 13 remote from the cross-piece 11.2 and have their axes substantially contained within a single horizontal plane.

A vertical rectilinear guide 18 (Figs 3, 4) is fixed on the front face of each slide 13, on the side closer to the cross-piece 11.2. This guide 18 comprises a metal plate parallel to and spaced from the plate-type slide 13 and possessing sharp-edged opposite flanks.

Along the said rectilinear guide 18 of each slide 13, a respective carriage 19 is mounted to slide in the vertical direction by means of a plurality of pairs of twinned idle rollers 19.1, having their axes orthogonal relative to the said median plane and engaged to roll along the opposite flanks of the said guide 18.

Furthermore, on the front face of each slide 13 is mounted a double-acting pneumatic jack 20, whose cylinder 20.1 is fixed to the slide 13 with its axis parallel to the vertical direction of sliding of the said slide. The stem 20.2 of the said jack 20 is connected to the carriage 19, in a manner such as to bring about, by means of its extension and retraction movements relative to the cylinder 20.1, corresponding travels in the vertical direction bringing the carriage 19 respectively closer to and farther from the cross-piece 11.2 of the portal structure 11. Each jack 20 is connected leaktightly in a respective pneumatic control circuit branched off from a compressed air source (known per se and not shown).

Each carriage 19 bears a corresponding idle pulley 16.3, essentially coplanar with the said driven pulley 16.1 and stationary idle pulley 16.2, and arranged outside the respective upright 11.1, with its shaft having its axis substantially orthogonal to the said median plane and passing freely through the front slit 11.4 of the respective upright 11.1.

The four pulleys 16.1, 16.2 and 16.3 all have identical diameters (reduced proportionately by comparison with the diameter of the pulleys of conventional sawing machines) and, in pairs 16.1/16.3 and 16.2/16.3, the said pulleys have their axes coplanar with the respective vertical median planes of the uprights 11.1, orthogonal to the said median plane. This arrangement helps to minimize the overall dimensions of the sawing machine 10, producing it in a compact form.

A cutting wire 21 is wound in the form of a closed ring and caused to circulate around the said four pulleys 16.1, 16.2, 16.3.

A protective casing 22, substantially in the shape of an inverted U, viewed frontally, covers the said pulleys with the cutting wire wound thereon, leaving exposed only the part of the lower strand 21.1 of the cutting wire 21 which performs the cut. This lower strand 21.1 extends transversely in the opening of the portal structure 11.

By means of this arrangement, when the geared motor 14 causes the transmission shaft 14.1 to rotate, the two slides 13 slide in synchrony in the vertical direction (as a result of the rotation of the adjustment screws 15 interacting with the corresponding nuts 15.1) along the guides 12 in the respective uprights 11.1 of the portal structure 11, causing the cutting wire 21 to perform a working travel or a return travel, depending on the direction of rotation of the said motor, in a plane (called the "cutting plane") substantially parallel to the said median plane.

In addition, the rotation of the geared motor 17.2 causes continuous circulation of the cutting wire 21 in the form of a closed ring by means of the driven pulley 16.1 and the turn pulleys 16.2, 16.3 around which the said wire is wound.

When a block B (Fig. 1) of material to be cut is arranged within the opening of the portal 11, on an appropriate support means, such as a trolley C moveable on guide rails in order to be cut transversely in the cutting plane, the closed-ring cutting wire 21 - which is initially raised towards the cross-piece 11.2 out of contact with the block C - is led to perform its downward working travel by means of appropriate rotation of the geared motor 14. The cutting wire 21 thus performs, with its lower strand 21.1, a cut passing through the block C in the cutting plane, arriving in the bottom position of its lower travel. The cut having been made, the cutting wire 21 is caused to perform a reverse travel until reaching its raised position of rest, by reverse rotation of the geared motor 14.

Furthermore, as is apparent from the foregoing, each slide 13 bears a respective pair of pulleys 16.1/16.3, 16.2/16.3, the distance between the centres of which can be varied by means of an appropriate vertical travel of the carriage 19 bearing the respective idle pulley 16.3 along the corresponding guide 18, this taking place by the extension or retraction of the stem 20.2 of the associated pneumatic jack 20. This arrangement ensures, first, a correct tensioning of the closed cutting wire 21 by means of tensioning means contained within the hollow body of the uprights 11.1 of the portal 11, that is within the overall profile of the said portal, while secondly it also makes it possible to use the said cutting wire in accordance with a closed geometry which can be varied depending on the requirements of the cut to be performed and the material to be cut, for example by keeping the part which performs the cut appropriately aligned relative to the piece to be cut.

It should be noted that, in the abovementioned portal structure 11, which is fixed relative to the base 10.1, the vertical direction corresponds to the longitudinal direction of its uprights 11.1. This clarification is provided in the interests of the correct interpretation of the claims and of the description given below of the other illustrative forms of embodiment of the present invention.

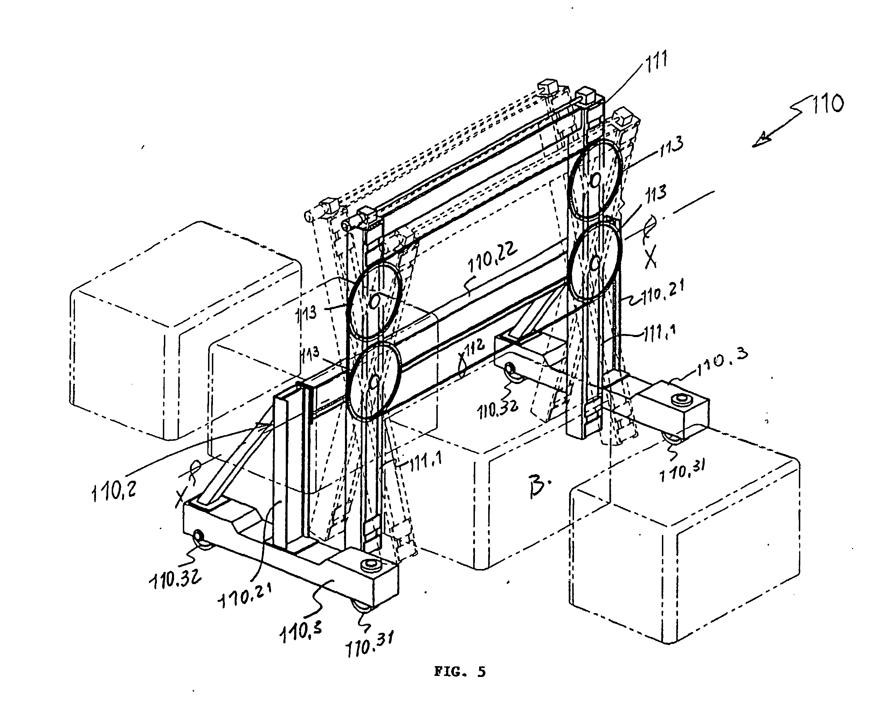

### Second embodiment (Figures 5-8)

In Fig. 5, 110 designates as a whole the wire sawing machine according to the invention, here designed for the trimming and/or squaring of blocks, especially of stonelike material.

The said sawing machine 110 comprises a portal structure 111, supported relative to a substantially trestle-type support 110.2, in a manner such as to oscillate relative to a substantially horizontal axis X-X so that a block B (Fig. 5) of material to be trimmed or squared can be arranged through the opening of said portal 111. The free lower ends of the uprights 111.1 of the said portal 111 are very close to the base of the said trestle-type support 110.2.

The said trestle-type support 110.2 includes a pair of vertical columns 110.21, external relative to the uprights 111.1 of the portal 111 and connected at the top by means of a cross-piece 110.22.

Advantageously, the said trestle-type support 110.2 is mounted on a pair of wheeled shoes 110.3, each shoe 110.3 being fixed to the foot of an associated column 110.21.

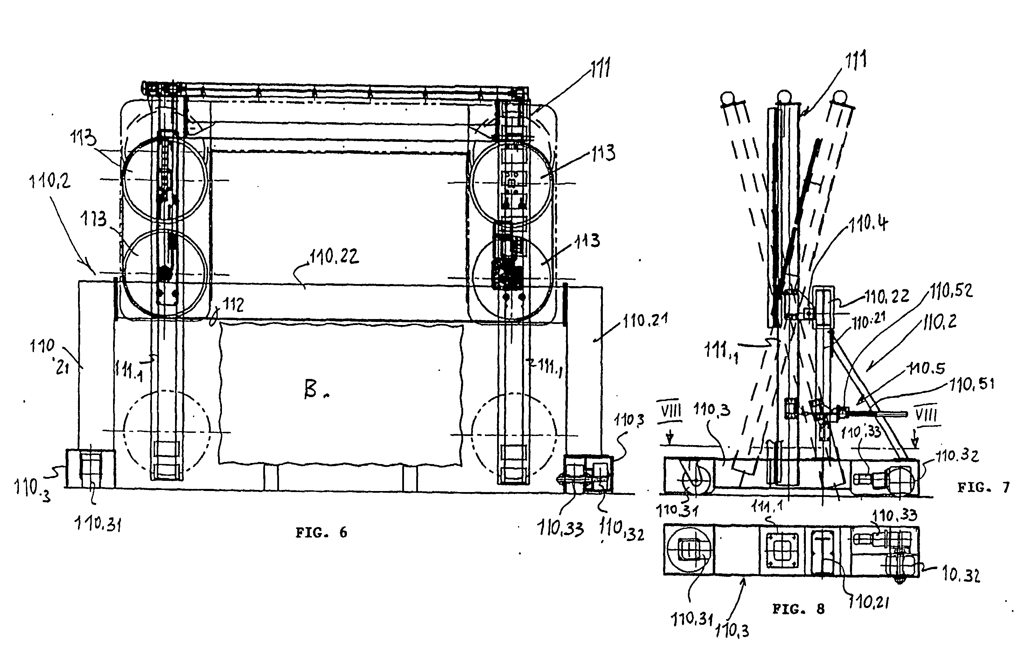

Each shoe 110.3 possesses a pivoting wheel 110.31 and a wheel 110.32 which is driven to rotate by means of its own motor means 110.33 (Figs. 7, 8), preferably under remote control. In this manner, the sawing machine 110 is self-propelled.

The said portal structure 111 is connected in an oscillating manner to the said trestle-type support 110.2 by means of a cylindrical hinged pivot 110.4 (Fig. 7), provided between the uprights 111.1 of the portal 111 and the said cross-piece 110.22 of the support 110.2 and allowing its oscillation about the said axis X-X.

Means 110.5 (Fig. 7) for regulating the portal structure 111 and locking it in an oscillating position about the said axis X-X relative to the said trestle-support 110.2 are provided between the said portal 111 and the said support. The said regulating and locking means 110.5 include, in accordance with the example shown, an adjustment screw 110.51 having a substantially horizontal axis and articulated at one of its ends by a kinematic connecting-rod-and-crank connection to an upright 111.1 of the said portal 111. The said adjustment screw 110.51 is engaged by a threaded coupling in a corresponding nut 110.52 supported to rotate about the axis of the screw 110.51 relative to a column 110.21 of the support 110.2. By means of manual rotation of the said nut 110.52 in one direction or the other the extension or retraction of the corresponding adjustment screw 110.51 is caused, consequently making the said portal structure 111 oscillate in opposite directions about the axis X-X as shown in broken lines in Figures 5 and 7.

In the said wire sawing machine 110 having a portal structure 111 for the cutting of material in block form and as explained above with reference to the first embodiment, a wire-type cutting tool, known as the "cutting wire" in the form of a closed ring, is caused to circulate over four pulleys 113 (one of which is driven) supported by the portal 111 and mutually coplanar, and is caused to move in a plane hereinafter called the "cutting plane", substantially parallel to the median plane dividing both the uprights 111.1 and the cross-piece 111.2 of the said portal, so that when a block of material to be cut is arranged within the opening of the portal, for example on a convenient support means, it can be cut crosswise in the cutting plane. To this end the closed-ring cutting wire 112 performs the cutting of the block in the cutting plane with its lower strand (the strand remote from the cross-piece of the portal), while it circulates between the said pulleys 113, which are slidingly supported along the said uprights 111.1 of the portal structure 111, performing with a working travel between a raised position, in which its lower strand is not in contact with the block to be cut, and a lower position, in which the said strand has performed a cut passing transversely through the block within the cutting plane. After the cut has been made, the cutting wire 112 performs the reverse travel until reaching its raised position of rest.

By means of this arrangement, when it is desired to trim and/or square a block B of stonelike or similar material, for example in a quarry yard, the sawing machine 110, with its cutting wire 112 in the raised position of rest, is caused to move towards the said block B until its portal 111 is arranged astride the said block, in the appropriate position. Then, by acting upon the regulating and locking means 110.5 the portal 111 is oriented about the axis X-X at an inclination relative to the horizontal corresponding to that of the face of the block which it is desired to trim or square. The cut is made, the cutting wire 112 then being returned to its raised position of rest. This sequence may be repeated until the block B has been completely trimmed and/or squared.

It should be noted that the regulating and locking means may comprise a pneumatic jack to replace the adjustment screw and the corresponding nut.

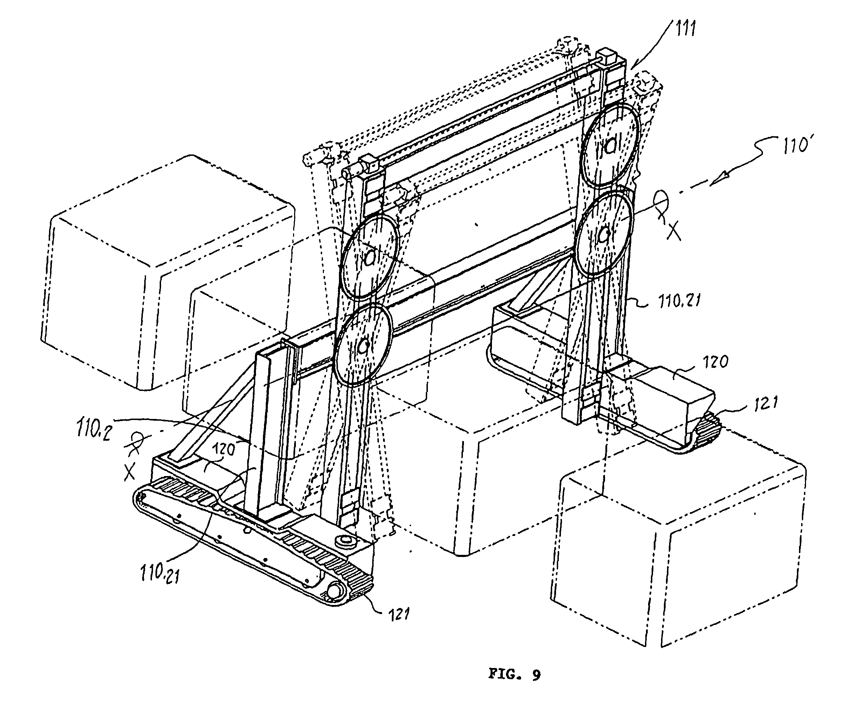

### Alternative embodiment (Figures 9-11)

The wire sawing machine according to the invention is here indicated by 110' and is substantially similar in structure and function to the wire sawing machine 110 described above with reference to Figures 5-8. The parts of the sawing machine 110' similar to those of the sawing machine 110 are indicated by the same reference numerals and are not further described.

As an alternative embodiment, the trestle-type support 110.2 of the sawing machine 110' is mounted on a pair of shoes 120 having tracks 121, each shoe being fixed to the foot of a respective column 110.21 of the said trestle-type support 110.2.

The sawing machine 110' is thus self-propelled. The said tracks 121 are controlled by means of respective motor means (known per se), preferably under remote control.

Furthermore, in the sawing machine 110', means 130 (Fig. 11) are provided for regulating and locking the oscillating portal structure 111 in a position of oscillation about the said axis X-X.

The said regulating and locking means 130 include, as a variation on the corresponding means 110.5 of the sawing machine 110, reversible electric geared motor means 131 which selectively drive in rotation, and in opposite directions, the nut 110.52, so as to bring about the corresponding extension or retraction of the respective adjustment screw 110.51, causing the said portal structure 111 to pivot, relative to the trestle-type support 110.2, in opposite directions about the axis X-X, as shown in Figures 9 and 11.

Otherwise, reference is made to the foregoing description of the second embodiment of the present invention.

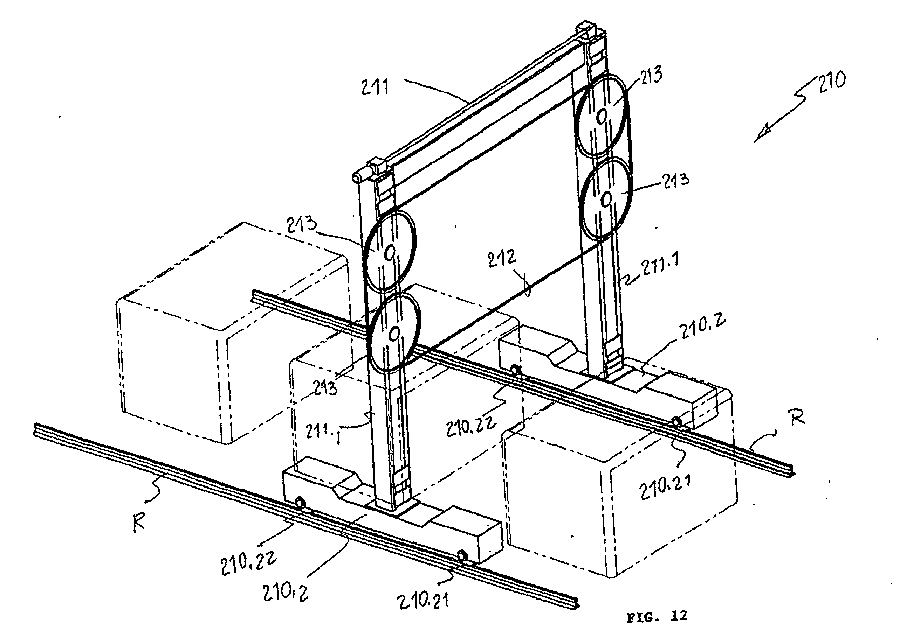

### Third embodiment (Figures 12-15)

In Fig. 12, 210 designates as a whole the wire sawing machine according to the invention, here designed for the trimming and/or squaring of blocks, particularly of stonelike material.

The said sawing machine 210 comprises a portal structure 211 for the cutting of a block, for example of stone, arranged in the opening of the said portal 211 and supported by means of a pair of wheeled shoes 210.2. Each shoe 210.2 is fixed to the foot of a respective upright 211.1 of the portal structure 211.

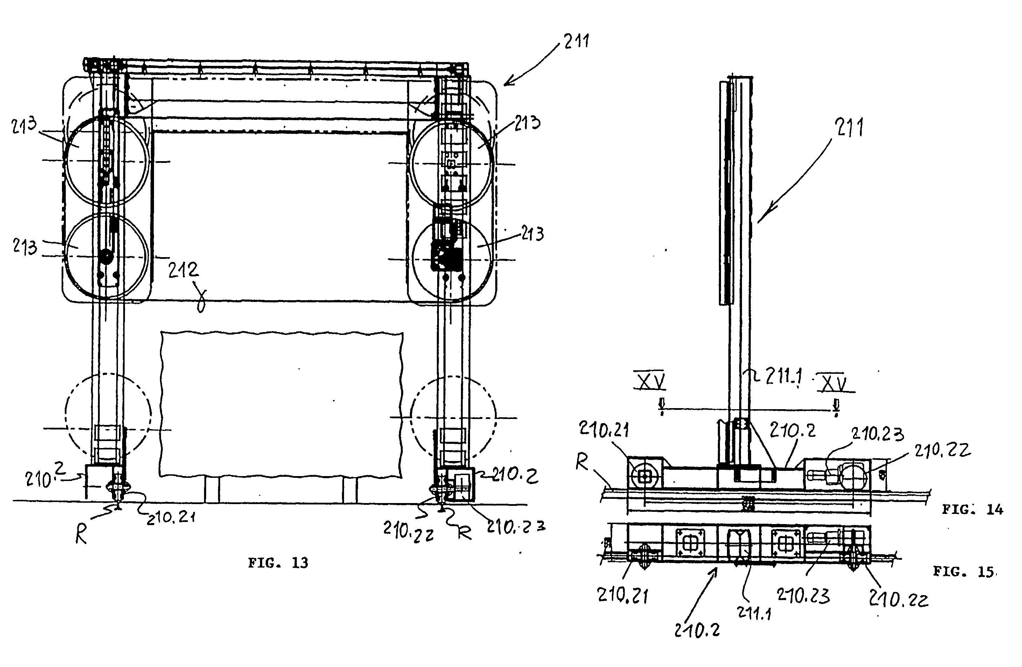

Preferably, the said wheels are adapted to slide along guide rails, and each shoe 210.2 comprises an idle wheel 210.21 and a wheel 210.22 that is driven to rotate by means of its own motor means 210.23 (Figs. 14, 15), preferably under remote control. In this manner, the sawing machine 210 is self-propelled.

The said motor means 210.23 are controlled so as to bring about synchronized rotations of the respective controlled wheels 210.22, for example in order to bring about stepwise movements of the sawing machine 210 along corresponding guide rails. To this end, the said motor means 210.23 are controlled in a synchronized manner by means of respective encoder means.

In the said wire sawing machine 210 having a portal structure 211 for the cutting of material in block form (as explained above with reference to the abovementioned first embodiment of the invention), a wire-type cutting tool 212, known as the "cutting wire", in the form of a closed ring, is caused to circulate over a plurality of pulleys 213 (one of which is a drive pulley) supported by the portal 211 and mutually coplanar, and is caused to move in a substantially vertical plane the "cutting plane" so that when a block of material to be cut is arranged within the opening of the portal, for example on a convenient support means, it can be cut crosswise in the cutting plane. The closed-ring cutting wire 212 performs the cutting of the block in the cutting plane with its lower strand (the strand remote from the cross-piece of the portal), while it circulates between the said pulleys 213, which are slidingly supported along the said uprights 211.1 of the portal structure 211, performing a working travel between a raised position, in which its lower strand is not in contact with the block to be cut, and a lower position, in which the said strand has performed a transverse through cut or trimming cut of the block within the cutting plane. After the cut has been made, the cutting wire 212 performs the reverse travel until reaching its raised position of rest.

By means of this arrangement, when the sawing machine 210 is arranged to travel by means of its wheels 210.21, 210.22 on a pair of corresponding guide rails R, along which and between which are aligned a plurality of blocks of stonelike or similar material to be cut or trimmed by means of the said sawing machine (Fig. 12), the latter is caused to move, for example by a series of steps, until vertically above each region of each block in which it is desired to make a through cut or a trimming cut and it performs the said cuts sequentially, so as to optimize the processing times and substantially reduce non-working periods.

It should be noted that each shoe may be provided with wheels for travelling on the ground instead of on guide rails.

## Claims

1. Wire sawing machine having a portal structure for the cutting of material in block form, for example blocks of stone, metal and the like in which a wire-type cutting tool, known as the "cutting wire", in the form of a closed ring, is caused to circulate over a plurality of pulleys, one of which is driven, supported by the portal and is caused to move in a plane hereinafter called the cutting plane substantially parallel to the vertical median plane dividing both the uprights and the cross-piece of the said portal hereinafter referred to as the median plane, so that a block of material to be cut is arranged within the opening of the portal, on a convenient support means, in order to be cut crosswise in the cutting plane, the closed-ring cutting wire performs the cutting of the block in the cutting plane with its lower strand, remote from the cross-piece of the portal, which is passed between at least two pulleys which are each supported to slide along a respective upright, performing a working travel between a raised position, in which its lower strand is not in contact with the block to be cut, and a lower position, in which the said strand has performed a cut passing transversely through the block within the cutting plane and, after the cut has been made, the cutting wire performs a reverse travel until reaching its raised position of rest, **characterized in that** the said portal structure (11, 111, 211) includes a pair of hollow-bodied vertical uprights (11.1, 111.1, 211.1), **in that**, within each hollow-bodied upright, a respective slide (13) is mounted to slide longitudinally, **in that** one of the said two slides (13) supports a driven pulley (16.1) arranged outside the respective upright and having its shaft (16.11) with its axis substantially orthogonal relative to the said median plane and passing freely through a continuous longitudinal slot (11.4) of the respective upright, **in that** the other of the said two slides (13) supports a stationary idle pulley (16.2), essentially coplanar relative to the said driven pulley (16.1), having its shaft with its axis substantially orthogonal relative to the said median plane and passing freely through a continuous longitudinal slit (11.4) in the respective upright, **in that** a longitudinal rectilinear guide (18) is fixed on each of the said two slides (13), **in that** a respective carriage (19) is mounted to slide in the longitudinal direction along the said rectilinear guide (18) of each slide (13), **in that** a control jack (20) is mounted on each of the said two carriages (13) so as to cause, during the extension and retraction travels of its stem (20.2), corresponding travels in the longitudinal direction of the said carriage (19), **in that** each carriage (19) bears a corresponding idle pulley (16.3), essentially coplanar relative to the said driven pulley (16.1) and stationary idle pulley (16.2), arranged outside the respective upright, having its shaft with its axis substantially orthogonal relative to the said median plane and passing freely through the slit (11.4) of the respective upright, and **in that** a cutting wire (21) is wound in the form of a closed ring and is caused to circulate around the said four pulleys (16.1, 16.2, 16.3), so that each slide (13) supports a pair of pulleys (16.1/16.3, 16.2/16.3), the distance between whose centres can be varied by means of an appropriate travel in the longitudinal direction of the respective carriage (19) bearing an idle pulley (16.3) along the corresponding guide (18), which travel is caused by extension or retraction of the stem (20.2) of the associated control jack (20), this arrangement ensuring, first, correct tensioning of the closed-ring cutting wire (21) by means of tensioning means contained within the hollow body of the uprights of the portal (11, 111, 211), that is within the overall profile of the said portal, while, secondly, it makes it possible to use the cutting wire (21) in accordance with a closed-ring geometry that can be varied depending on the requirements of the cut to be performed and the material to be cut, for example by keeping the part which performs the cut appropriately oriented relative to the piece to be cut.

2. Wire sawing machine according to Claim 1, **characterized in that** the said slide (13), bearing on one of its faces the said driven pulley (16.1), also bears, on its opposite face, a controlling geared motor unit (17), whose output shaft (17.1) is kinematically linked to the shaft (16.11) of the said driven pulley (16.1) and passes through a slit (11.4) of the said upright (11.1, 111.1, 211.1) opposite the slit (11.4) through which the shaft (16.11) of the said driven pulley passes, so that a geared motor (17.2) of the said unit (17) is cantilever-supported relative to the said slide (13) outside the said upright and substantially within the overall profile of the said upright, viewed frontally or dorsally.

3. Wire sawing machine according to Claim 1, **characterized in that** it comprises a controlling geared motor (14), which is reversible and fixed relative to the portal (11, 111, 211) substantially within the overall profile of the said portal, viewed frontally or dorsally, which geared motor (14) turns a transmission shaft (14.1), supported transversely on the portal and along the cross-piece (11.2) with its axis parallel to the said median plane, and **in that** it further comprises an adjustment screw (15) supported to rotate in each upright (11.1, 111.1, 211.1) with its axis oriented parallel to the longitudinal direction of the said upright and substantially orthogonal relative to the axis of the transmission shaft (14.1), from which the screw derives the rotary motion, the said adjustment screw (15) being engaged by threaded coupling in a corresponding nut (15.1) fixed relative to the slide (13) sliding in the said upright along respective guides (12), in a manner such that the rotation of the said controlling geared motor (14), in one direction or the other, determines the corresponding longitudinal travel of the said slide (14) along the associated upright of the portal structure.

4. Wire sawing machine according to Claim 1, 2 or 3, **characterized in that** the said four paired pulleys (16.1/16.3, 16.2/16.3) have their axes coplanar in respective vertical median planes of the uprights (11.1), orthogonal to the said median plane.

5. Wire sawing machine according to Claim 1, **characterized in that** the said driven pulley (16.1) and the said stationary idle pulley (16.2) are each arranged in the same zone of the respective slide (13), for example the zone remote from the cross-piece (11.2).

6. Wire sawing machine according to Claim 1, **characterized in that** each hollow-bodied upright (11.1) is formed by a pair of metal sections (11.3), substantially of ^{"}U" shape, facing each other at a distance apart so as to form a box-type body having two continuous longitudinal rectilinear slits (11.4) between the respective opposing flanges.

7. Wire sawing machine according to one or more of the preceding claims, used for the trimming and/or squaring of blocks, particularly of stonelike material, **characterized in that** it comprises a portal structure (111) supported relative to a substantially trestle-type support (110.2), in a manner such as to oscillate relative to an essentially horizontal axis (X-X), and in a manner such that a block of material to be trimmed or squared can be arranged through the opening of the said portal, so that, in order to trim and/or square a block (B) of stonelike or similar material, the said portal is arranged astride the said block, the portal is oriented about the said axis (X-X) at an inclination relative to the horizontal corresponding to that of the face of the said block which it is desired to trim or square, and the cut is performed, this sequence being repeated until the block (B) has been completely trimmed and/or squared.

8. Wire sawing machine according to Claim 7, **characterized in that** the said trestle-type support (110.2) includes a pair of columns (110.21) which are external relative to the uprights (111.1) of the portal (111) of the said sawing machine (110; 110').

9. Wire sawing machine according to Claim 7 or 8, **characterized in that** the said trestle-type support (110.2) is mounted on a pair of wheeled shoes (110.3).

10. Wire sawing machine according to Claim 9, **characterized in that** each shoe (110.3) comprises a pivoting wheel (110.31) and a wheel (110.32) which is driven to rotate by means of its own motor means (110.33), preferably under remote control, so that the sawing machine (110) is self-propelled.

11. Wire sawing machine according to Claim 7 or 8, **characterized in that** the said trestle-type support (110.2) is mounted on a pair of shoes (120) on tracks (121), the said tracks being controlled by means of motor means, preferably under remote control, so that the sawing machine (110') is self-propelled.

12. Wire sawing machine according to Claim 7, **characterized in that** the said portal structure (111) is connected in an oscillating manner to the said trestle-type support (110.2) by means of a cylindrical hinged pivot (110.4), provided between the uprights (111.1) of the said portal structure and the said cross-piece of the support (110.2) and allowing its oscillation about the said axis (X-X).

13. Wire sawing machine according to Claim 7 or 12, **characterized in that** it comprises means (110.5; 130) for regulating and locking the said portal structure (111) in a position of oscillation about the said axis (X-X) relative to the said trestle-type support (110.2).

14. Wire sawing machine according to Claim 13, **characterized in that** the said regulating and locking means (110.5; 130) include an adjustment screw (110.51), articulated at one of its ends relative to the said portal (111) and engaged by a threaded coupling in a corresponding nut (110.52) supported relative to the support (110.2).

15. Wire sawing machine according to Claim 13, **characterized in that** the said regulating and locking means include jack means articulated between the said portal structure (111) and the said support (110.2).

16. Wire sawing machine according to one or more of the preceding claims, used for cutting and/or trimming, for example in essentially vertical planes, of blocks, particularly of stonelike material, **characterized in that** it comprises a portal structure (211) supported by means of a pair of wheeled shoes (210.2), so that the sawing machine (210) is arranged to travel by means of its wheels (210.21, 210.22) on a running track (R), along which and between which are aligned a plurality of blocks of stonelike or similar material to be cut or trimmed, and the machine is caused to move, for example by a series of steps, until vertically above each region of each block in which it is desired to make a through cut or a trimming cut and it performs the said cuts sequentially, so as to optimize the processing times and substantially reduce non-working periods.

17. Wire sawing machine according to Claim 16, **characterized in that** each shoe (210.2) is fixed to the foot of a respective upright (211.1) of the portal structure (211).

18. Wire sawing machine according to Claim 16, **characterized in that** each shoe (210.2) comprises a idle wheel (210.21) and a wheel (210.22) which is driven to rotate by means of its own motor means (210.23), preferably under remote control, so that the machine (210) is self-propelled.

19. Wire sawing machine according to Claim 16, 17 or 18, **characterized in that** the said wheels (210.21, 210.22) are provided to travel along corresponding guide rails (R).

20. Wire sawing machine according to Claim 18, **characterized in that** the said motor means (210.23) are controlled to bring about synchronized rotations of the respective controlled wheels (210.22), for example in order to cause stepwise displacements of the sawing machine (210).

21. Wire sawing machine according to Claim 20, **characterized in that** the said motor means (210.23) are controlled in a synchronized manner by means of respective encoder means.

## Patentansprüche

1. Drahtsägemaschine, die eine Tragestruktur hat, zum Schneiden von Material in Blockform, zum Beispiel Blöcke aus Stein, Metall und ähnlichem, in welcher ein Schneidewerkzeug des Draht-Typs, bekannt als der "Schneidedraht", in der Form eines geschlossenen Rings, dazu gebracht wird, zu zirkulieren über mehrere Rollen, von denen eine angetrieben wird, getragen durch das Tragwerk, und dazu gebracht wird, sich zu bewegen in einer Ebene, im Folgenden die Schneideebene genannt, im Wesentlichen parallel zur vertikalen Medianebene, die sowohl die Pfosten als auch das Querstück dieses Tragwerks, im Folgenden die Medianebene genannt, trennt, so dass ein Block eines zu schneidenden Materials innerhalb der Öffnung des Tragwerks auf einem geeigneten Tragemittel angeordnet wird, um quer in der Schneideebene geschnitten zu werden, der geschlossene Ring des Schneidedrahts das Schneiden des Blocks ausführt in der Schneideebene mit seiner unteren Litze entfernt vom Querstück des Tragwerks, welche passiert wird zwischen mindestens zwei Rollen, von denen jede getragen wird, um entlang eines entsprechenden Pfostens zu gleiten, wobei eine Arbeitsbewegung durchgeführt wird zwischen einer erhöhten Position, in welcher seine untere Litze nicht in Kontakt ist mit dem zu schneidenden Block, und einer unteren Position, in der diese Litze einen Schnitt ausgeführt hat, der quer durch den Block geht innerhalb der Schneideebene und, nachdem der Schnitt gemacht wurde, der Schneidedraht eine entgegengesetzte Bewegung durchführt, bis er seine erhöhte Ruheposition erreicht hat, **dadurch gekennzeichnet, dass** diese Tragestruktur (11, 111, 211) ein Paar von aus Hohlkörpern bestehenden vertikalen Pfosten (11.1, 111.1, 211.1) umfasst, dadurch, dass, innerhalb von jedem Hohlkörper-Pfosten, eine entsprechende Führung (13) befestigt ist, um längs zu gleiten, dadurch, dass eine dieser beiden Führungen (13) eine angetriebene Rolle (16.1) trägt, die außerhalb des entsprechenden Pfostens angeordnet ist und ihre Welle (16.11) hat, mit ihrer Achse im Wesentlichen orthogonal in Bezug auf diese Medianebene und frei durch einen Längsschlitz (11.4) des entsprechenden Pfostens läuft, dadurch, dass die andere dieser zwei Führungen (13) eine feststehende Leitrolle (16.2) trägt, die im Wesentlichen koplanar ist in Bezug auf diese angetriebene Rolle (16.1), ihre Welle mit ihrer Achse im Wesentlichen orthogonal in Bezug auf diese Medianebene hat und frei durch einen Längsschlitz (11.4) in dem entsprechenden Pfosten läuft, dadurch, dass eine längs verlaufende geradlinige Leitvorrichtung (18) auf jeder dieser beiden Führungen (13) befestigt ist, dadurch, dass ein entsprechender Schlitten (19) befestigt ist, um in der Längsrichtung entlang dieser geradlinigen Leitvorrichtung (18) von jeder Führung (13) geführt zu werden, dadurch, dass ein Steuerungsheber (20) befestigt ist auf jeder dieser beiden Führungen (13), um während der Verlängerungs- und Rückzugsbewegung seines Schafts (20.2), die entsprechenden Bewegungen in der Längsrichtung dieses Schlittens (19) zu verursachen, dadurch, dass jeder Schlitten (19) eine entsprechende Leitrolle (16.3) trägt, die wesentlich koplanar zur entsprechenden angetriebenen Rolle (16.1) und der feststehenden Leitrolle (16.2) ist, angeordnet außerhalb des entsprechenden Pfostens, die ihre Welle mit ihrer Achse im Wesentlichen orthogonal in Bezug auf diese Medianebene hat und frei durch den Schlitz (11.4) des entsprechenden Pfostens läuft, und dadurch, dass ein Schneidedraht (21) gewunden ist in der Form eines geschlossenen Rings und dazu gebracht wird, um diese vier Rollen (16.1, 16.2, 16.3) zu zirkulieren, so dass jede Führung (13) ein Paar von Rollen trägt (16.1/16.3, 16.2/16.3), die Distanz zwischen deren Zentren variiert werden kann durch eine geeignete Bewegung in die Längsrichtung des entsprechenden Schlittens (19), der eine Leitrolle (16.3) trägt entlang der entsprechenden Leitvorrichtung (18), deren Bewegung verursacht wird durch die Verlängerung oder den Rückzug des Schafts (20.2) des entsprechenden Steuerungshebers (20), diese Anordnung, erstens, ein korrektes Spannen dieses aus einem geschlossenen Ring bestehenden Schneidedrahts (21) durch die Spannungsmittel, die innerhalb des Hohlkörpers der Pfosten des Tragwerks (11, 111, 211) enthalten sind, der innerhalb des Gesamtprofils dieses Tragwerks ist, während, zweitens, sie es möglich macht, den Schneidedraht (21) zu verwenden gemäß einer Geometrie des geschlossenen Rings, die variiert werden kann in Abhängigkeit von den Erfordernissen des durchzuführenden Schnitts und des zu schneidenden Materials, zum Beispiel durch Halten des Teils, das den Schnitt angemessen ausgerichtet in Bezug auf das zu schneidende Teil durchführt.

2. Drahtsägemaschine nach Anspruch 1, **dadurch gekennzeichnet, dass** diese Führung (13), die auf einer ihrer Seiten diese angetriebene Rolle (16.1) trägt, ebenfalls, auf ihrer entgegengesetzten Seite, eine steuernde Getriebemotoreinheit (17) trägt, deren Antriebswelle (17.1) kinematisch mit der Welle (16.11) dieser angetriebenen Rolle (16.1) verbunden ist und einen Schlitz (11.4) dieses Pfostens (11.1, 111.1, 211.1) passiert, gegenüber dem Schlitz (11.4), den die Welle (16.11) dieser angetriebenen Rolle passiert, so dass ein Getriebemotor (17.2) von dieser Einheit (17) auf einem Ausleger getragen wird in Bezug auf diese Führung (13) außerhalb dieses Pfostens und im Wesentlichen innerhalb des Gesamtprofils dieses Pfostens, von der Vorderseite oder der Rückseite aus gesehen.

3. Drahtsägemaschine nach Anspruch 1, **dadurch gekennzeichnet, dass** sie einen steuernden Getriebemotor (14) umfasst, der umsteuerbar ist und fest in Bezug auf das Tragwerk (11, 111, 211) im Wesentlichen innerhalb des Gesamtprofils von diesem Tragwerk, von der Vorderseite oder der Rückseite gesehen, deren Getriebemotor (14) eine Transmissionswelle (14.1) dreht, die quer getragen wird auf dem Tragwerk und entlang des Querstücks (11.2) mit ihrer Achse parallel zu dieser Medianebene, und dadurch, dass sie des Weiteren eine Justierschraube (15) umfasst, die getragen wird, um in jedem Pfosten (11.1, 111.1, 211.1) zu rotieren mit ihrer Achse ausgerichtet parallel zur Längsrichtung dieses Pfostens und im Wesentlichen orthogonal in Bezug auf die Achse der Transmissionswelle (14.1), von der die Schraube die Rotationsbewegung übernimmt, diese Justierschraube (15) in Eingriff steht durch eine Schraubkupplung in einer entsprechenden Mutter (15.1), die fest ist in Bezug auf die Führung (13), die in diesem Pfosten geführt wird entlang der entsprechenden Leitvorrichtung (12), derart, dass die Rotation dieses steuernden Getriebemotors (14), in eine Richtung oder die andere, die entsprechende Längsbewegung dieser Führung (14) entlang des verbundenen Pfostens der Tragestruktur bestimmt.

4. Drahtsägemaschine nach Anspruch 1, 2 oder 3, **dadurch gekennzeichnet, dass** diese vier gepaarten Rollen (16.1/16.3, 16.2/16.3) ihre Achsen koplanar in entsprechenden vertikalen Medianebenen der Pfosten (11.1) haben, orthogonal zu dieser Medianebene.

5. Drahtsägemaschine nach Anspruch 1, **dadurch gekennzeichnet, dass** diese angetriebene Rolle (16.1) und diese feststehende Leitrolle (16.2) jede im gleichen Bereich der entsprechenden Führung (13) angeordnet sind, zum Beispiel dem Bereich entfernt von dem Querstück (11.2).

6. Drahtsägemaschine nach Anspruch 1, **dadurch gekennzeichnet, dass** jeder Hohlkörper-Pfosten (11.1) gebildet ist durch ein Paar von Metallabschnitten (11.3), im Wesentlichen in "U"-Form, die einander in einem Abstand zugewendet sind, um einen kastenähnlichen Körper zu bilden, der zwei ununterbrochene, längs verlaufende, geradlinige Schlitze (11.4) zwischen den entgegengesetzten Flanschen hat.

7. Drahtsägemaschine nach einem oder mehreren der vorhergehenden Ansprüche, verwendet für das Zuschneiden und/oder vierkantige Formen von Blöcken, insbesondere von steinartigem Material, **dadurch gekennzeichnet, dass** sie eine Tragestruktur (111) umfasst, die getragen wird in Bezug auf einen im Wesentlichen gestellartigen Träger (110.2), in einer Art, um zu oszillieren in Bezug auf eine wesentlich horizontale Achse (X-X), und in einer Art, so dass ein Block von Material, das zugeschnitten oder vierkantig geformt werden muss, durch die Öffnung von diesem Tragwerk angeordnet werden kann, so dass, zum Zuschneiden und/oder vierkantigen Formen eines Blocks (B) von steinartigem oder gleichartigem Material, dieses Tragwerk quer über diesem Block angeordnet ist, das Tragwerk um diese Achse (X-X) ausgerichtet ist bei einer Neigung in Bezug auf die Horizontale, die derjenigen der Vorderseite dieses Blocks, von welcher gewünscht wird, dass sie ihn zuschneidet oder vierkantig formt, entspricht, und der Schnitt durchgeführt wird, wobei dieser Ablauf wiederholt wird, bis der Block (B) vollständig zugeschnitten und/oder vierkantig geformt wurde.

8. Drahtsägemaschine nach Anspruch 7, **dadurch gekennzeichnet, dass** dieser gestellartige Träger (110.2) ein Paar von Ständern (110.21) umfasst, die außen sind in Bezug auf die Pfosten (111.1) des Tragwerks (111) dieser Sägemaschine (110; 110').

9. Drahtsägemaschine nach Anspruch 7 oder 8, **dadurch gekennzeichnet, dass** dieser gestellartige Träger (110.2) befestigt ist auf einem Paar von Füßen auf Rädern (110.3).

10. Drahtsägemaschine nach Anspruch 9, **dadurch gekennzeichnet, dass** jeder Fuß (110.3) ein schwenkendes Rad (110.31) und ein Rad (110.32) umfasst, das angetrieben wird, um zu rotieren mittels seiner eigenen Motormittel (110.33), vorzugsweise unter Fernsteuerung, so dass die Sägemaschine (110) selbstfahrend ist.

11. Drahtsägemaschine nach Anspruch 7 oder 8, **dadurch gekennzeichnet, dass** dieser gestellartige Träger (110.2) befestig ist auf einem Paar Füßen (120) auf Ketten (121), diese Ketten gesteuert werden mittels von Motormitteln, vorzugsweise unter Fernsteuerung, so dass die Sägemaschine (110') selbstfahrend ist.

12. Drahtsägemaschine nach Anspruch 7, **dadurch gekennzeichnet, dass** diese Tragestruktur (111) verbunden ist auf eine oszillierende Art mit diesem gestellartigen Träger (110.2) mittels einer zylindrischen gelenkigen Schwenkvorrichtung (110.4), die bereitgestellt ist zwischen den Pfosten (111.1) dieser Tragestruktur und diesem Querstück des Trägers (110.2) und ihre Oszillation um diese Achse (X-X) ermöglicht.

13. Drahtsägemaschine nach Anspruch 7 oder 12, **dadurch gekennzeichnet, dass** sie Mittel umfasst (110.5; 130) zur Regulierung und Sperrung dieser Tragestruktur (111) in einer Position der Oszillation um diese Achse (X-X) in Bezug auf diesen gestellartigen Träger (110.2).

14. Drahtsägemaschine nach Anspruch 13, **dadurch gekennzeichnet, dass** diese Regulierungs- und Sperrungsmittel (110.5; 130) eine Justierschraube (110.51) umfassen, die gelenkig ist an einem ihrer Enden in Bezug auf dieses Tragwerk (111) und in Eingriff steht durch eine Schraubkupplung in einer entsprechenden Mutter (110.52) getragen in Bezug auf den Träger (110.2).

15. Drahtsägemaschine nach Anspruch 13, **dadurch gekennzeichnet, dass** dieses Regulierungs- und Sperrungsmittel Hebemittel umfasst, die gelenkig sind zwischen dieser Tragestruktur (111) und diesem Träger (110.2).

16. Drahtsägemaschine nach einem oder mehreren der vorhergehenden Ansprüche, verwendet zum Schneiden und/oder Zuschneiden, zum Beispiel in wesentlich vertikalen Ebenen, von Blöcken, insbesondere aus steinartigem Material, **dadurch gekennzeichnet, dass** sie eine Tragestruktur (211) umfasst, die getragen wird mittels einem Paar von Füßen auf Rädern (210.2), so dass die Sägemaschine (210) angeordnet ist, um sich mittels ihrer Räder (210.21, 210.22) auf einem Zuggleis (R) zu bewegen, entlang dem mehrere zu schneidende oder zuzuschneidende Blöcke von steinartigem oder gleichartigem Material ausgerichtet sind, und eine Bewegung der Maschine wird verursacht, zum Beispiel durch eine Reihe von Schritten, bis sie vertikal über jedem Bereich von jedem Block, in dem von ihr gewünscht wird, dass sie einen Durchschnitt oder einen Zuschnitt macht und sie diese Schnitte aufeinanderfolgend ausführt, um die Verarbeitungszeiten zu optimieren und die arbeitsfreien Zeiträume wesentlich zu reduzieren.

17. Drahtsägemaschine nach Anspruch 16, **dadurch gekennzeichnet, dass** jeder Fuß (210.2) am Fuß des entsprechenden Pfostens (211.1) der Tragestruktur (211) befestigt ist.

18. Drahtsägemaschine nach Anspruch 16, **dadurch gekennzeichnet, dass** jeder Fuß (210.2) ein Leitrad (210.21) und ein Rad (210.22) umfasst, das angetrieben wird um zu rotieren mittels seiner eigenen Motormittel (210.23), vorzugsweise unter Fernsteuerung, so dass die Maschine (210) selbstfahrend ist.

19. Drahtsägemaschine nach Anspruch 16, 17 oder 18, **dadurch gekennzeichnet, dass** diese Räder (210.21, 210.22) bereitgestellt werden, um sich entlang der entsprechenden Führungsschienen (R) zu bewegen.

20. Drahtsägemaschine nach Anspruch 18, **dadurch gekennzeichnet, dass** diese Motormittel (210.23) gesteuert werden, um synchronisierte Rotationen der entsprechenden gesteuerten Räder (210.22) zu bewerkstelligen, zum Beispiel, um schrittweise Verschiebungen der Sägemaschine (210) zu verursachen.

21. Drahtsägemaschine nach Anspruch 20, **dadurch gekennzeichnet, dass** diese Motormittel (210.23) gesteuert sind auf eine synchronisierte Art mittels von entsprechenden Codiermitteln.

## Revendications

1. Machine de sciage à fil ayant une structure à portique pour le découpage de matériau sous forme de blocs, par exemple des blocs de pierre, métal et similaire dans lequel un outil de découpage de type fil, connu comme le « fil de découpage », sous la forme d'un anneau fermé, est amené à circuler sur une pluralité de poulies, dont une est entraînée, supportées par le portique et est amené à se déplacer sur un plan, appelé ci-après le plan médian, essentiellement parallèle au plan médian vertical qui divise à la fois les montants et l'entretoise dudit portique, appelé ci-après le plan médian, de telle sorte qu'un bloc de matériau à découper soit agencé à l'intérieur de l'ouverture du portique sur un moyen de support convenable, de manière à être découpé en travers sur le plan de découpage, le fil de découpage en anneau fermé effectue le découpage du bloc dans le plan de découpage avec son brin inférieur éloigné de l'entretoise du portique, qui est passé entre au moins deux poulies qui sont chacune supportées afin de coulisser le long d'un montant respectif, en effectuant une course de travail entre une position élevée, à laquelle son brin inférieur n'est pas en contact avec le bloc à découper, et une position inférieure, à laquelle ledit brin effectue un découpage en passant transversalement à travers le bloc à l'intérieur du plan de découpage et, après que le découpage a été réalisé, le fil de découpage effectue une course inverse jusqu'à ce qu'il atteigne sa position élevée de repos, **caractérisée en ce que** ladite structure à portique (11,111,211) inclut une paire de montants (11.1, 111.1, 211.1) verticaux à châssis creux, **en ce que**, à l'intérieur du montant à châssis creux, un coulisseau (13) respectif est monté afin de coulisser longitudinalement, **en ce que** un desdits deux coulisseaux (13) supporte une poulie (16.1) motrice agencée à l'extérieur du montant respectif et ayant son arbre (16.11) avec son axe essentiellement orthogonal par rapport audit plan médian et passant librement à travers une encoche (11.4) longitudinale continue du montant respectif, **en ce que** l'autre desdits deux coulisseaux (13) supporte une poulie folle (16.2) fixe, essentiellement coplanaire par rapport à ladite poulie (16.1) motrice, ayant son arbre avec son axe essentiellement orthogonal par rapport audit plan médian et passant librement à travers une fente (11.4) longitudinale continue dans le montant respectif, **en ce qu'**un guide (18) rectiligne longitudinal est fixé sur chacun desdits deux coulisseaux (13), **en ce qu'**un chariot (19) respectif est monté afin de coulisser dans la direction longitudinale le long dudit guide (18) rectiligne de chaque coulisseau (13), **en ce qu'**un vérin de levage (20) est monté sur chacun desdits deux chariots (13) de manière à entraîner, pendant les courses d'extension et de rétraction de sa tige (20.2), des courses correspondantes dans la direction longitudinale dudit chariot (19), **en ce que** chaque chariot (19) supporte une poulie folle (16.3) correspondante, essentiellement coplanaire par rapport à ladite poulie motrice (16.1) et ladite poulie folle (16.2) fixe, agencée à l'extérieur du montant respectif, ayant son arbre avec son axe essentiellement orthogonal par rapport audit plan médian et passant librement à travers la fente (11.4) du montant respectif, et **en ce que** un fil de découpage (21) est enroulé sous la forme d'un anneau fermé et est amené à circuler autour desdites quatre poulies (16.1,16.2,16.3), de telle sorte que chaque coulisseau (13) supporte une paire de poulies (16.1/16.3, 16.2/16.3), la distance entre les centres de ces dernières pouvant être modifiée au moyen d'une course appropriée dans la direction longitudinale du chariot (19) respectif supportant une poulie folle (16.3) le long du guide (18) correspondant, laquelle course est provoquée par l'extension ou la rétraction de la tige (20.2) du vérin de levage (20) associé, cet agencement assurant d'abord un tensionnement correct du fil de découpage (21) en forme d'anneau fermé au moyen d'un moyen de tensionnement contenu dans le châssis creux des montants du portique (11,111,211), c'est à dire à l'intérieur de l'ensemble du profilé dudit portique, alors que, deuxièmement, ceci permet d'utiliser le fil de découpage (21) en conformité avec une géométrie d'anneau fermé qui peut varier en fonction des exigences du découpage à effectuer et du matériau à découper, par exemple en maintenant la partie qui effectue le découpage orientée de manière appropriée par rapport à la pièce à découper.

2. Machine de sciage à fil selon la revendication 1, **caractérisée en ce que** ledit coulisseau (13), portant sur une de ses faces ladite poulie motrice (16.1), porte également, sur sa face opposée, une unité de moteur de commande à train d'engrenages (17), dont l'arbre de sortie (17.1) est relié cinématiquement à l'arbre (16.11) de ladite poulie motrice (16.1) et passe à travers une fente (11.4) dudit montant (11.1,111.1,211.1) opposée à la fente (11.4) à travers laquelle l'arbre (16.11) de ladite poulie motrice passe, de telle sorte qu'un moteur à train d'engrenages (17.2) de ladite unité (17) soit supporté en porte-à-faux par rapport audit coulisseau (13) à l'extérieur dudit montant et essentiellement à l'intérieur de l'ensemble du profilé dudit montant, vu frontalement ou dorsalement.

3. Machine de sciage à fil selon la revendication 1, **caractérisée en ce qu'**elle comprend un moteur de commande à train d'engrenages (14), qui est réversible et fixe par rapport au portique (11,111,211) essentiellement à l'intérieur de l'ensemble du profilé dudit portique, vu frontalement ou dorsalement, lequel moteur à train d'engrenages (14) tourne un arbre de transmission (14.1), supporté transversalement sur le portique et le long de l'entretoise (11.2) avec son axe parallèle audit plan médian, et **en ce qu'**il comprend en outre une vis de réglage (15) supportée afin d'entrer en rotation dans chaque montant (11.1,111.1,211.1) avec son axe orienté parallèlement à la direction longitudinale dudit montant et essentiellement orthogonal par rapport à l'axe de l'arbre de transmission (14.1), à partir duquel la vis dévie le mouvement rotatif, ladite vis d'ajustement (15) étant engagée par couplage fileté dans un écrou (15.1) correspondant fixé relativement au coulisseau (13) qui coulisse dans ledit montant le long des guides (12) respectifs, de telle sorte que la rotation dudit moteur à train d'engrenages de commande (14), dans une direction ou l'autre, détermine la course longitudinale correspondante dudit coulisseau (13) le long du montant associé de la structure à portique.

4. Machine de sciage à fil selon la revendication 1, 2 ou 3, **caractérisée en ce que** lesdites quatre poulies appariées (16.1/16.3, 16.2/16.3) ont leurs axes coplanaires sur des plans médians verticaux respectifs des montants (11.1), orthogonalement audit plan médian.

5. Machine de sciage à fil selon la revendication 1, **caractérisée en ce que** ladite poulie motrice (16.1) et ladite poulie folle fixe (16.2) sont chacune agencées dans la même zone du coulisseau (13) respectif, par exemple la zone éloignée de l'entretoise (11.2).

6. Machine de sciage à fil selon la revendication 1, **caractérisée en ce que** chaque montant (11.1) à châssis creux est formé par une paire de sections en métal (11.3), essentiellement en forme de « U », mutuellement en vis à vis à une certaine distance de manière à former un châssis de type boîte ayant deux fentes (11.4) rectilignes longitudinales continues entre les flasques opposés respectifs.

7. Machine de sciage à fil selon une ou plusieurs des revendications précédentes, utilisée pour le détourage et/ou l'équarrissage de blocs, particulièrement de matériaux en pierre, **caractérisée en ce qu'**elle comprend une structure à portique (111) supportée relativement à un support (110.2) essentiellement de type chevalet, de manière à osciller relativement à un axe (X-X) essentiellement horizontal et de telle sorte qu'un bloc du matériau à détourer ou équarrir puisse être agencé à travers l'ouverture dudit portique, de telle sorte que, afin de détourer et/ou équarrir un bloc (B) de matériau en pierre ou similaire, ledit portique soit agencé à cheval sur ledit bloc, le portique est orienté sur ledit axe (X-X) à une inclinaison par rapport au plan horizontal correspondant à celle de la face dudit bloc que l'on désire détourer ou équarrir, et le découpage est effectué, cette séquence étant répétée jusqu'à ce que le bloc (B) ait été complètement détouré et/ou équarri.

8. Machine de sciage à fil selon la revendication 7, **caractérisée en ce que** ledit support (110.2) de type chevalet inclut une paire de colonnes (110.21) qui sont externes par rapport aux montants (111.1) du portique (111) de ladite machine de sciage (110;110').

9. Machine de sciage à fil selon la revendication 7 ou 8, **caractérisée en ce que** ledit support (110.2) de type chevalet est monté sur une paire de semelles sur roues (110.3).

10. Machine de sciage à fil selon la revendication 9, **caractérisée en ce que** chaque semelle (110.3) comprend une roue pivotante (110.31) et une roue (110.32) qui est entraînée en rotation au moyen de son propre moyen de moteur (110.33), de préférence par commande à distance, de telle sorte que la machine de sciage (110) soit auto-propulsée.

11. Machine de sciage à fil selon la revendication 7 ou 8, **caractérisée en ce que** ledit support (110.2) de type chevalet est monté sur une paire de semelles (120) sur des chenilles (121), lesdites chenilles étant commandés au moyen d'un moyen de moteur, de préférence par commande à distance, de telle sorte que la machine de sciage (110') soit auto-propulsée.

12. Machine de sciage à fil selon la revendication 7, **caractérisée en ce que** ladite structure à portique (111) est connectée de manière oscillante audit support (110.2) de type chevalet au moyen d'un pivot (110.4) à charnière cylindrique, prévu entre les montants (111.1) de ladite structure à portique et ladite entretoise du support (110.2) et permettant son oscillation sur ledit axe (X-X).

13. Machine de sciage à fil selon la revendication 7 ou 12, **caractérisée en ce qu'**elle comprend un moyen (110.5 ;130) pour régler et verrouiller ladite structure à portique (111) à une position d'oscillation sur ledit axe (X-X) relativement audit support (110.2) de type chevalet.

14. Machine de sciage à fil selon la revendication 13, **caractérisée en ce que** ledit moyen de réglage et de verrouillage (110.5 ; 130) inclut une vis de réglage (110.51), articulée à une de ses extrémités relativement audit portique (111) et engagée par un couplage fileté dans un écrou (110.52) correspondant, supporté relativement au support (110.2).

15. Machine de sciage à fil selon la revendication 13, **caractérisée en ce que** ledit moyen de réglage et de verrouillage inclut un moyen de vérin de levage articulé entre ladite structure à portique (111) et ledit support (110.2).

16. Machine de sciage à fil selon une ou plusieurs des revendications précédentes, utilisée pour découpée et/ou détourer, par exemple en plans essentiellement verticaux, des blocs, notamment de pierre, **caractérisée en ce qu'**elle comprend une structure à portique (211) supportée au moyen d'une paire de semelles sur roues (210.2), de telle sorte que la machine de sciage (210) soit agencée de manière à effectuer une course au moyen de ses roues (210.21, 210.22) sur un chemin de roulement (R) le long duquel et entre lequel une pluralité de blocs de matériaux en pierre ou similaires à découper ou détourer sont alignés, et la machine est amenée à se déplacer, par exemple en une série d'étapes, jusqu'à se situer verticalement au dessus de chaque région de chaque bloc dans lequel il est désiré d'effectuer un découpage traversant ou un découpage de détourage et elle effectue lesdits découpages en séquence, de manière à optimiser les temps de traitement et à essentiellement réduire les périodes de temps mort.

17. Machine de sciage à fil selon la revendication 16, **caractérisée en ce que** chaque semelle (210.2) est fixée au pied d'un montant (211.1) respectif de la structure à portique (211).

18. Machine de sciage à fil selon la revendication 16, **caractérisée en ce que** chaque semelle (210.2) comprend une roue folle (210.21) et une roue (210.22) qui est entraînée en rotation au moyen de son propre moyen de moteur (210.23), de préférence par contrôle à distance, de telle sorte que la machine (210) soit auto-propulsée.

19. Machine de sciage à fil selon la revendication 16,17 ou 18, **caractérisée en ce que** lesdites roues (210.21, 210.22) sont prévues afin d'effectuer une course le long des rails de guidage (R) correspondants.

20. Machine de sciage à fil selon la revendication 18, **caractérisée en ce que** ledit moyen de moteur (210.23) est commandé afin d'entraîner des rotations synchronisées des roues (210.22) commandées respectives, par exemple afin de provoquer des déplacements par étapes de la machine de sciage (210).

21. Machine de sciage à fil selon la revendication 20, **caractérisée en ce que** ledit moyen de moteur (210.23) est commandé de manière synchronisée au moyen d'un moyen d'encodage respectif.
